# EUROPÄISCHE PATENTSCHRIFT

(11) **EP 2 203 267 B1**
(45) Veröffentlichungstag und Bekanntmachung des Hinweises auf die Patenterteilung: **20.05.2015**
(21) Anmeldenummer: 08801203.4
(22) Anmeldetag: 20.08.2008
(51) Int. Cl.: B21D 43/02, B21D 43/14, B65G 47/84, B21K 27/00

(54) **VORRICHTUNG ZUM FLIESSPRESSEN VON RONDEN MIT EINER ZUFÜHRANORDNUNG**
DEVICE FOR THE EXTRUSION OF ROUND BLANKS , COMPRISING A FEEDING DEVICE
DISPOSITIF DE FORMAGE PAR FLUAGE DE RONDS AVEC UN DISPOSITIF D'ALIMENTATION

(30) Priorität: 22.09.2007 DE 102007045354
(43) Veröffentlichungstag der Anmeldung: 07.07.2010
(73) Patentinhaber: Mall + Herlan GMBH, 76327 Pfinztal (DE)
(72) Erfinder: GOEB, Claude, F-67540 Ostwald (FR); GAEHR, Dieter, 76297 Stutensee (DE)
(74) Vertreter: Dimmerling & Huwer
(86) Internationale Anmeldenummer: PCT/DE2008/001380
(87) Internationale Veröffentlichungsnummer: WO 2009/036725

(56) Entgegenhaltungen:
- DE-A1- 2 923 908
- JP-A- 9 175 638
- JP-A- 56 078 721
- US-A- 4 172 377
- US-A- 4 601 384

## Beschreibung

Die Erfindung betrifft eine Vorrichtung nach dem Oberbegriff des Anspruchs 1, zum Fließpressen von Ronden, mit einer Pressbüchse und einem Stempel, mittels dem die Ronden in der Pressbüchse pressbar sind, sowie einer Zuführanordnung, mittels der die Ronden zwischen Stempel und Pressbüchse transportierbar sind, wobei die Zuführanordnung eine Führungsschiene aufweist, in der die Ronden hintereinander angeordnet sind, und an deren unterem Ende Mittel zum Vereinzeln der Ronden angeordnet sind.

Eine derartige Vorrichtung ist im Stand der Technik hinlänglich bekannt und wird regelmäßig zum Herstellen von Aluminiumdosen, Tuben oder Ähnlichem verwendet. Bei der bekannten Vorrichtung ist das grundsätzliche Problem vorhanden, dass die Ronden in der Führungsschiene eine so genannte Stop-and-go-Bewegung durchführen. Das heißt die Ronden werden taktweise fortbewegt. Zwischen zwei Bewegungszyklen ist daher eine Stillstandszeit vorhanden, während der die unterste Ronde mittels der Vereinzelungsvorrichtung von der Führungsschiene in den Raum zwischen Stempel und Pressbüchse transportiert wird und die übrigen Ronden in der Führungsschiene nicht bewegt werden. Ein Stillstand der Ronden in der Führungsschiene ist jedoch nachteilig, da sich die Ronden in der Führungsschiene festsetzen könnten und die Ronden zu Beginn eines Bewegungszyklus jeweils von der Geschwindigkeit Null aus beschleunigt werden müssen, wodurch die von ihnen, bedingt durch die Erdbeschleunigung, erreichbare Höchstgeschwindigkeit relativ gering ist. Dies wirkt sich nachteilig auf die Taktzeit und damit die Produktivität der Vorrichtung aus.

Es sind zwar unterschiedliche Vereinzelungsvorrichtungen bekannt. Sie führen jedoch alle zu einem Stop-and-go-Betrieb in der Führungsschiene.

Ein weiterer Nachteil der bekannten Vorrichtung besteht darin, dass die Ronden während des Transports von der Führungsschiene in den Raum zwischen Stempel und Pressbüchse an ihrem Umfang klemmend geführt werden. Dies führt dazu, dass die Ronden an den Klemmstellen Druckmarken aufweisen, welche beim Fließpressen Streifen bei dem herzustellenden Produkt hervorrufen. Hierdurch wird der Eindruck hervorgerufen, als sei das fertige Produkt beschädigt.

Darüber hinaus hat die bekannte Vorrichtung den Nachteil, dass bei einem Produktwechsel, insbesondere bei der Verwendung von Ronden mit anderer Dicke, umfangreiche Einstellungen an der Vorrichtung vorgenommen werden müssen. Insbesondere müssen häufig Änderungen an der Steuerung vorgenommen werden, die dadurch bedingt sind, dass Halteelemente, welche die Ronden solange in der erforderlichen Position vor der Pressbüchse halten, bis der Stempel auf die Ronde auftrifft, erst unmittelbar vor dem Auftreffen des Stempels auf die Ronde entfernt werden dürfen. Ändert sich die Dicke der Ronden, muss die Steuerung so verändert werden, dass diese Voraussetzung wieder gegeben ist. Das heißt, die Bewegung der Halteelemente und die Bewegung des Stempels müssen wieder so aufeinander abgestimmt werden, dass die Halteelemente erst unmittelbar vor dem Auftreffen des Stempels auf die Ronde mit der veränderten Dicke entfernt werden. Diese Einstellung ist oftmals sehr zeitaufwendig.

Es ist Aufgabe der Erfindung, eine eingangs genannte Vorrichtung derart auszubilden, dass sich die Taktzahl erhöht.

Die Lösung dieser Aufgabe ergibt sich aus den Merkmalen des Anspruchs 1. Vorteilhafte Weiterbildungen der Erfindung ergeben sich aus den Unteransprüchen.

Gemäß der Erfindung ist eine Vorrichtung zum Fließpressen von Ronden, mit einer Pressbüchse und einem Stempel, mittels dem die Ronden in der Pressbüchse pressbar sind, sowie einer Zuführanordnung, mittels der die Ronden zwischen Stempel und Pressbüchse transportierbar sind, wobei die Zuführanordnung eine Führungsschiene aufweist, in der die Ronden hintereinander angeordnet sind, und an deren unterem Ende Mittel zum Vereinzeln der Ronden angeordnet sind, dadurch gekennzeichnet, dass die Vereinzelungsmittel eine um eine Drehachse in eine Drehrichtung drehbare Vereinzelungsnocke aufweisen, deren Mantelfläche wenigstens einen konvex verlaufenden Bereich aufweist, dessen Abstand zur Drehachse sich in Drehrichtung der Nocke vergrößert, und wenigstens einen konkav verlaufenden Bereich aufweist, dessen Krümmung an den Durchmesser der Ronden angepasst ist.

Dadurch, dass die Vereinzelungsmittel eine um eine Drehachse in eine Drehrichtung drehbare Vereinzelungsnocke aufweisen, deren Mantelfläche wenigstens einen konvex verlaufenden Bereich aufweist, dessen Abstand zur Drehachse sich in Drehrichtung der Nocke vergrößert, und wenigstens einen konkav verlaufenden Bereich aufweist, dessen Krümmung an den Durchmesser der Ronden angepasst ist, wird erreicht, dass die Ronden beim Vereinzeln nicht mehr bis zum Stillstand abgebremst werden. Die Ronden befinden sich stets in Bewegung, wodurch zum einen die Gefahr, dass die Ronden in der Führungsschiene stecken bleiben, verringert wird. Zum anderen führt dies aber insbesondere dazu, dass die Transportgeschwindigkeit der Ronden erhöht wird. Eine erhöhte Transportgeschwindigkeit der Ronden wiederum führt dazu, dass sich die Zykluszeit verkürzt, das heißt sich die Taktzahl der Vorrichtung erhöht.

Da die Vereinzelungsnocke ein so genanntes Formatteil ist, lässt sie sich auf einfache Weise austauschen. Daher lassen sich der konvex verlaufende Bereich der Mantelfläche der Vereinzelungsnocke sowie der konkav verlaufende Bereich der Vereinzelungsnocke durch Austausch der Vereinzelungsnocke auf einfache Weise an den Durchmesser der Ronden anpassen. Weitere Veränderungen müssen an der Vorrichtung bei einem Produktwechsel in der Regel nicht vorgenommen werden.

Der konvex verlaufende Bereich der Vereinzelungsnocke ist so ausgebildet, dass die Linie, auf der die Vereinzelungsnocke mit der Ronde in Kontakt tritt, bei Drehung der Nocke um die Drehachse stets eine Abwärtsbewegung durchführt. Der konkav verlaufende Bereich der Vereinzelungsnocke dient dazu, die Ronde aufzunehmen, weshalb die Krümmung des konkav verlaufenden Bereichs dem Radius der Ronden nahezu entspricht.

In besonders vorteilhafter Weise ist bei einer besonderen Ausführungsform der Erfindung vorgesehen, dass die Nocke zwischen zwei Führungsscheiben angeordnet ist, welche mit der Nocke um die Drehachse drehbar sind. Hierdurch gelangen die Ronden beim Auftreffen auf die Nocke zwischen die Führungsscheiben, wodurch auf eine klemmende Führung der Ronden an ihrem Umfang verzichtet werden kann. Es kann somit ausgeschlossen werden, dass die Ronden an ihrem Umfang Druckmarken aufweisen. Dies wirkt sich sehr vorteilhaft auf die Qualität des fertigen Produkts aus.

Bei einer besonderen Ausführungsform der Erfindung ist vorgesehen, dass der Abstand der Führungsscheiben an die Dicke sowie eine gegebenenfalls vorhandene maximale Wölbung der Ronden angepasst ist. Durch die Anpassung des Abstands der Führungsscheiben an die Dicke beziehungsweise eine gegebenenfalls vorhandene Wölbung der Ronden wird auf einfache Weise erreicht, dass die Ronden zwischen den Führungsscheiben ein geringes Spiel haben. Dies wirkt sich sehr vorteilhaft auf die Führung der Ronden aus. Das heißt, es kann erreicht werden, dass die Ronden stets in einer optimalen Stellung vor der Pressbüchse angeordnet sind, das heißt die Ebene der Ronden parallel zur Ebene der Fläche des Stempels verläuft.

Ganz besonders vorteilhaft ist eine Ausführungsform der Erfindung, bei der die Kontur der Führungsscheiben an die Dicke der Ronden angepasst ist. Hierdurch kann erreicht werden, dass die Führung der Ronden durch die Führungsscheiben exakt dann aufhört, wenn sich der Stempel unmittelbar vor der Ronde befindet. Die Führungsscheiben können mit der Vereinzelungsnocke auf einfache Weise ausgetauscht werden. Bei Formatwechsel können Einstellvorgänge daher seitens des Bedieners entfallen. Ein Produktwechsel kann daher in kurzer Zeit erfolgen.

Bei dünneren Ronden beziehungsweise Ronden mit kleinerem Durchmesser muss die Kontur der Führungsscheiben so ausgebildet sein, dass sich der von den Führungsscheiben abgedeckte Bereich vergrößert. Denn bei einer dünneren Ronde trifft der Stempel später auf die Ronden auf als bei dickeren Ronden.

Als sehr vorteilhaft hat sich auch eine Ausführungsform der Erfindung herausgestellt, bei der die Führungsschiene senkrecht oberhalb der Pressbüchse beziehungsweise dem Stempel angeordnet ist. Hierdurch können die Ronden aus einer Geraden bewegt werden. Auch dies wirkt sich vorteilhaft auf die Taktzeit der Vorrichtung aus.

Bei einer weiteren besonderen Ausführungsform der Erfindung ist vorgesehen, dass die Drehachse der Nocke seitlich außerhalb der Führungsschiene angeordnet ist. Hierdurch werden die Ronden durch die Vereinzelungsnocke nicht behindert. Die Ronden können auf geradem Wege auf die Rondenauflage gelangen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine besondere Ausführungsform einer erfindungsgemäß ausgebildeten Zuführanordnung in schematischer Darstellung von vorne,
- Fig. 2: die in Fig. 1 dargestellte Zuführanordnung von der Seite,
- Fig. 3a: die in Fig. 1 dargestellte Zuführanordnung, bei der sich die Vereinzelungsnocke in einer ersten Stellung befindet,
- Fig. 3b: die in Fig. 1 dargestellte Zuführanordnung, bei der sich die Vereinzelungsnocke in einer zweiten Stellung befindet,
- Fig. 3c: die in Fig. 1 dargestellte Zuführanordnung, bei der sich die Vereinzelungsnocke in einer dritten Stellung befindet,
- Fig. 3d: die in Fig. 1 dargestellte Zuführanordnung, bei der sich die Vereinzelungsnocke in einer vierten Stellung befindet, und
- Fig. 4: eine Zuführanordnung mit einer weiteren Ausführungsform einer Vereinzelungsnocke.

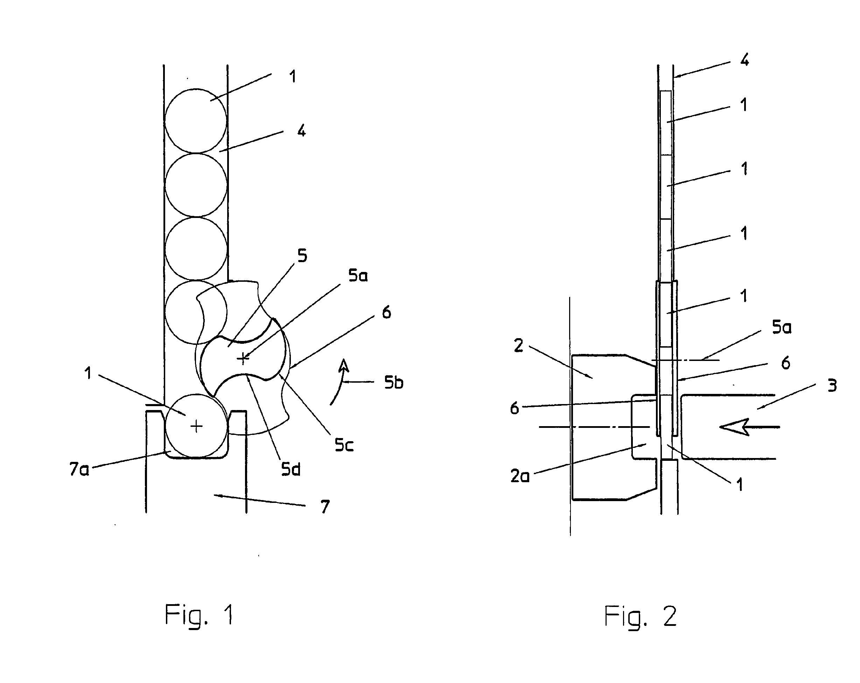

Wie insbesondere den Fig. 1 und 2 entnommen werden kann, weist eine Zuführanordnung einer Vorrichtung zum Fließpressen von Ronden 1 eine etwa senkrecht angeordnete Führungsschiene 4 auf, in welcher die Ronden 1 unmittelbar aufeinander folgend hintereinander angeordnet sind. Die Führungsschiene 4 ist im Wesentlichen in herkömmlicher Weise ausgebildet, das heißt sie weist eine ebene Grundfläche auf, deren Seiten U-förmig ausgebildet sind, sodass die Ronden 1 darin gegen ein Herausfallen gesichert sind. Aus Gründen der Übersichtlichkeit sind die U-förmig ausgebildeten Seiten der Führungsschiene 4 in den Figuren nicht dargestellt.

Unterhalb der Führungsschiene 4 ist eine Rondenauflage 7 angeordnet, welche eine U-förmige Ausnehmung 7a hat, in welche die Ronden 1 abgelegt werden können.

Wie Fig. 2 entnommen werden kann, befindet sich die Rondenauflage 7 zwischen einer Pressbüchse 2 und einem Stempel 3. Die Pressbüchse 2 weist eine Ausnehmung 2a auf, in die die Ronden1 mittels des Stempels 3 einpressbar sind, sodass die Ronden 1 einem Fließpressvorgang unterziehbar sind. Durch Druck auf die Ronden 1 fließt das Material der Ronden 1 an der Wandung des Stempels 3 entlang, wodurch ein becherförmiges Produkt gebildet wird. Die Ausnehmung 7a der Rondenauflage 7 ist daher geringfügig größer als der Durchmesser des Stempels 3 beziehungsweise des zu erzeugenden Teils.

Wie insbesondere Fig. 1 entnommen werden kann, ist am unteren Ende der Führungsschiene 4 eine der seitlichen Wandungen der Führungsschiene 4 nicht vorhanden. Das heißt die seitliche Wandung der Führungsschiene 4 erstreckt sich lediglich bis auf einen Abstand zum unteren Ende der Führungsschiene 4. Etwa in Höhe der Hälfte des Abstands ist die Drehachse 5a einer Vereinzelungsnocke 5 angeordnet, welche in den Weg der Ronden 1 eingreift und dadurch die Abwärtsbewegung der Ronden 1 steuert. Die Drehachse 5a ist des Weiteren außerhalb der Führungsschiene 4 angeordnet. Die Vereinzelungsnocke 5 wird von einem in der Figur nicht dargestellten Antrieb angetrieben, wodurch sie eine Drehbewegung in Richtung des Pfeils 5b durchführt. Der Antrieb erfolgt in vorteilhafter Weise synchron mit den weiteren Maschinenfunktionen. Die Vereinzelungsnocke 5 kann eine gleichförmige oder ungleichförmige Bewegung durchführen.

Die Vereinzelungsnocke 5 ist etwa so dick wie die Dicke der Ronden 1. Die Mantelfläche der Vereinzelungsnocke 5 weist einen konvex verlaufenden Bereich 5c auf, dessen Krümmung sich in Drehrichtung 5b der Vereinzelungsnocke 5 verringert. Das heißt, der Abstand der Mantelfläche der Vereinzelungsnocke 5 von ihrem Drehpunkt 5a wird in dem Bereich 5c im Verlauf der Drehrichtung 5b kontinuierlich größer. Die Bahn dieser Mantelfläche sollte so ausgelegt sein, dass die Ronden 1 eine kontinuierliche Abwärtsbewegung durchführen.

Die Vereinzelungsnocke 5 weist des Weiteren einen konkav verlaufenden Bereichen 5d auf, welcher einen Radius bildet, der dem Radius der Ronden 1 nahezu entspricht.

Durch Drehung der Vereinzelungsnocke 5 in Richtung des Pfeils 5b lassen sich die in der Führungsschiene 4 angeordneten Ronden 1 vereinzeln. Dies wird später noch näher erläutert.

Wie insbesondere Fig. 2 entnommen werden kann, ist die Vereinzelungsnocke 5 zwischen zwei Führungsscheiben 6 angeordnet. Die Führungsscheiben 6 sind mit der Vereinzelungsnocke 5 verbunden, sodass sie dieselbe Drehbewegung durchführen wie die Vereinzelungsnocke 5.

Wie Fig. 1 entnommen werden kann, ist die Fläche der Führungsscheiben 6 größer als die Fläche der Vereinzelungsnocke 5. Die Fläche der Führungsscheiben 6 ist so gewählt, dass die Führungsscheiben 6 die unterste Ronde 1 umso mehr überdecken, umso mehr die unterste Ronde 1 in den Bereich der Führungsschiene 4 gelangt, in dem die eine Wandung der Führungsschiene 4 nicht mehr vorhanden ist. Hierdurch wird die durch die eine Wandung der Führungsschiene 4 wegfallende Führung der untersten Ronde 1 von den Führungsscheiben 6 übernommen. Die Führungsscheiben verhindern im unteren Bereich der Führungsschiene 4 das Herausfallen der Ronden 1 aus der Vorrichtung, da nur noch eine seitliche Führung durch die Führungsschiene 4 gewährleistet ist.

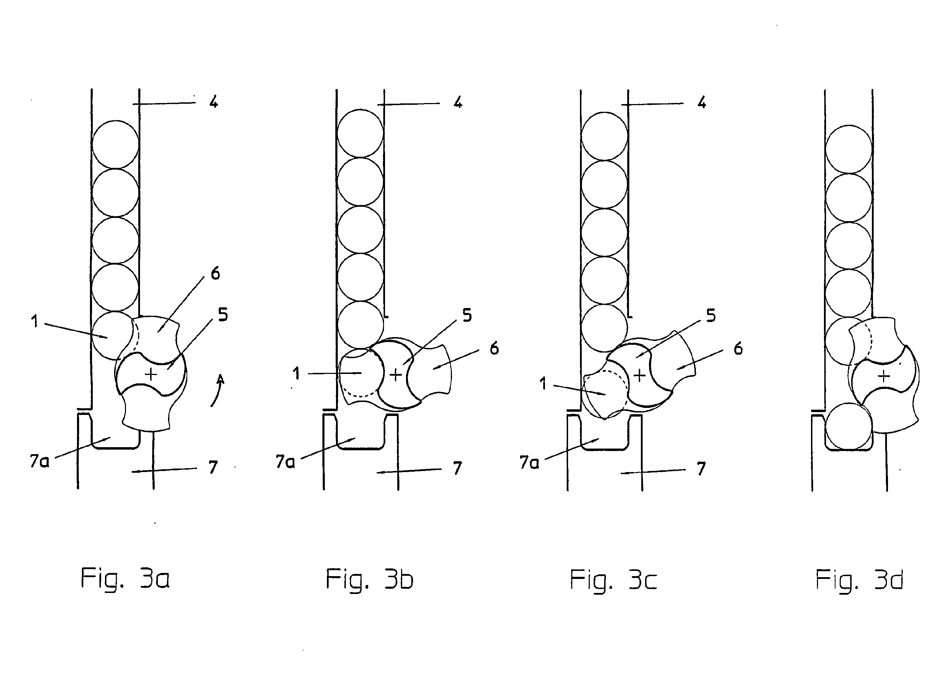

Die Funktion der Vereinzelungsnocke 5 wird nun anhand der Fig. 3a bis 3d beschrieben.

Wie Fig. 3a entnommen werden kann, stößt die unterste Ronde 1 auf die Mantelfläche der Vereinzelungsnocke 5, wodurch die Abwärtsbewegung der Ronde 1 durch die Stellung der Vereinzelungsnocke 5 gesteuert wird. In der in Fig. 3a dargestellten Stellung der Vereinzelungsnocke 5 beziehungsweise der Führungsscheiben 6 wird ein kleiner Teil der untersten Ronde 1 von den Führungsscheiben 6 überdeckt. Die unterste Ronde 1 ist daher bereits gegen ein Herausfallen aus der Führungsschiene 4 gesichert. Des Weiteren ist durch die Führungsscheiben 6 gewährleistet, dass die Ronde 1 ihre etwa senkrechte Position während der gesamten Drehung der Vereinzelungsnocke 5 beibehält.

Bei der in Fig. 3b dargestellten Position der Vereinzelungsnocke 5 befindet sich die unterste Ronde 1 bereits vollständig in der durch den konkav verlaufenden Bereich 5d der Vereinzelungsnocke 5 gebildeten Ausnehmung. In der gezeigten Position tritt die Vereinzelungsnocke 5 darüber hinaus bereits mit der nächsten über der untersten Ronde 1 angeordneten Ronde 1 in Kontakt, wodurch auch deren Bewegung von der Vereinzelungsnocke 5 gesteuert wird. Die Ronden 1 werden somit vereinzelt.

Bei der in Fig. 3c dargestellten Position der Vereinzelungsnocke 5 verlässt die unterste Ronde 1 bereits die durch den konkav verlaufenden Bereich 5d der Vereinzelungsnocke 5 gebildete Ausnehmung. Der Abstand zu der darüber angeordneten Ronde 1 hat sich bereits vergrößert. Die unterste Ronde eilt vor, um später stillstehen zu können.

Bei der in Fig. 3d dargestellten Position der Vereinzelungsnocke 5 hat die unterste Ronde 1 die durch den konkav verlaufenden Bereich 5d der Vereinzelungsnocke 5 gebildete Ausnehmung bereits verlassen und befindet sich in der Ausnehmung 7a der Rondenauflage 7. Des Weiteren wird die unterste Ronde 1 gerade nicht mehr von den Führungsscheiben 6 überdeckt. In dieser Stellung muss sich der Stempel 3 bereits unmittelbar vor der Ronde 1 befinden. Das heißt, die Fläche der Führungsscheiben 6 muss so gewählt sein, dass die Führungsscheiben 6 die Ronde 1 nicht mehr überdecken, wenn sich der Stempel 3 unmittelbar vor der Ronde 1 befindet.

Durch die erfindungsgemäße Anordnung ist es somit nicht mehr erforderlich, die Ronden klemmend zu halten. Die Gefahr, dass am Umfang der Ronden Druckmarken entstehen, besteht somit nicht mehr. Des Weiteren ist durch die Kurvenbahn der Vereinzelungsnocke 5 gewährleistet, dass die Ronden 1 stets in Bewegung bleiben. Hierdurch wird zum einen verhindert, dass sich die Ronden 1 in der Führungsschiene 4 festsetzen. Zum anderen wird erreicht, dass beim Vereinzeln der Ronden 1 die Anfangsgeschwindigkeit nicht null ist, wodurch sich die Endgeschwindigkeit erhöht. Da bei einem Produktwechsel im Wesentlichen lediglich die Vereinzelungsnocke 5 mit den Führungsscheiben 6 ausgewechselt werden braucht, lässt sich ein Umrüsten der Maschine auf schnelle und einfache Weise vornehmen.

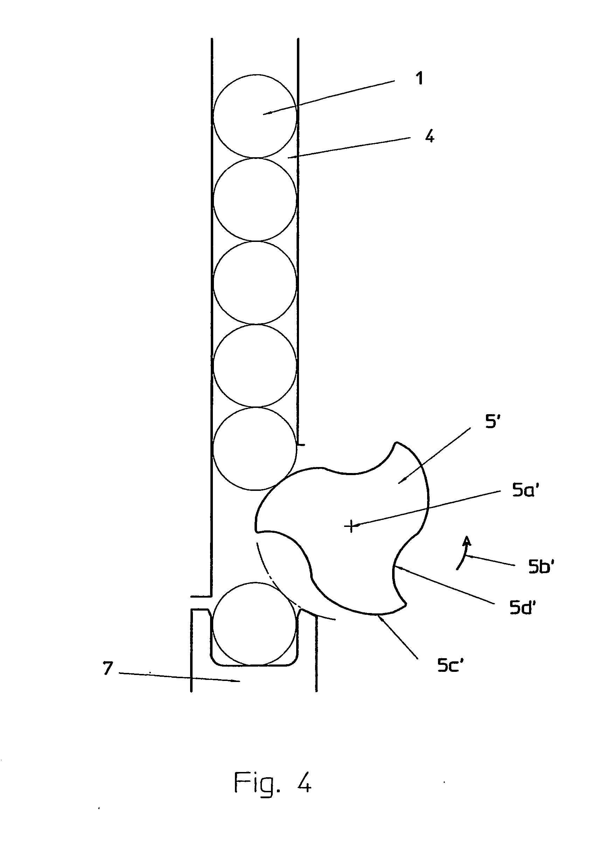

Wenngleich die vorliegende Erfindung auch anhand einer Vereinzelungsnocke mit zwei Kurvenbahnen erläutert wurde, so lässt sich die Erfindung auch mit einer Vereinzelungsnocke mit einer oder mehreren Kurvenbahnen realisieren. Wie Fig. 4 entnommen werden kann, kann eine Vereinzelungsnocke 5' beispielsweise drei konvex ausgebildete Bereiche 5c' und drei konkav ausgebildete Bereiche 5d' haben. Der Übersichtlichkeit halber sind in Fig. 4 die Führungsscheiben nicht dargestellt worden.

## Patentansprüche

1. Vorrichtung zum Fließpressen von Ronden (1), mit einer Pressbüchse (2) und einem Stempel (3), mittels dem die Ronden (1) in der Pressbüchse (2) pressbar sind, sowie einer Zuführanordnung (4, 5, 6), mittels der die Ronden (1) zwischen Stempel (3) und Pressbüchse (2) transportierbar sind, wobei die Zuführanordnung (4, 5, 6) eine Führungsschiene (4) aufweist, in der die Ronden (1) hintereinander angeordnet sind, und an deren unterem Ende Mittel (5, 6) zum Vereinzeln der Ronden (1) angeordnet sind,
**dadurch gekennzeichnet,**
**dass** die Vereinzelungsmittel (5, 6) eine um eine Drehachse (5a; 5a') in eine Drehrichtung (5b; 5b') drehbare Vereinzelungsnocke (5; 5') aufweisen, deren Mantelfläche wenigstens einen konvex verlaufendes Bereich (5c; 5c') aufweist, dessen Abstand zur Drehachse (5a; 5a') sich in Drehrichtung (5b; 5b') der Nocke (5; 5') vergrößert, und wenigstens einen konkav verlaufenden Bereich (5d; 5d') aufweist, dessen Krümmungsradius an den Durchmesser der Ronden (1) angepasst ist.

2. Vorrichtung nach Anspruch 1,
**dadurch gekennzeichnet,**
**dass** die Nocke (5) zwischen zwei Führungsscheiben (6) angeordnet ist, welche mit der Nocke (5) um die Drehachse (5a) drehbar sind.

3. Vorrichtung nach Anspruch 2,
**dadurch gekennzeichnet,**
**dass** der Abstand der Führungsscheiben (6) an die Dicke sowie eine gegebenenfalls vorhandene maximale Wölbung der Ronden (1) angepasst ist.

4. Vorrichtung nach Anspruch 2 oder 3,
**dadurch gekennzeichnet,**
**dass** die Kontur der Führungsscheiben (6) an die Dicke der Ronden (1) angepasst ist.

5. Vorrichtung nach einem der Ansprüche 1 bis 4,
**dadurch gekennzeichnet,**
**dass** die Führungsschiene (4) senkrecht oberhalb der Pressbüchse (2) beziehungsweise dem Stempel (3) angeordnet ist.

6. Vorrichtung nach einem der Ansprüche 1 bis 5,
**dadurch gekennzeichnet,**
**dass** die Drehachse (5a) der Nocke (5) seitlich außerhalb der Führungsschiene (4) angeordnet ist.

## Claims

1. Device for the extrusion of round blanks (1), comprising an extrusion sleeve (2) and a punch (3) by means of which the round blanks (1) can be pressed in the extrusion sleeve (2), as well as a feed assembly (4, 5, 6) by means of which the round blanks (1) can be transported between the punch (3) and the extrusion sleeve (2), wherein the feed assembly (4, 5, 6) has a guide rail (4), in which the round blanks (1) are arranged one behind the other and on the lower end of which are arranged means (5, 6) for separating the round blanks (1),
**characterized in that**
the separating means (5, 6) have a separating cam (5; 5'), which is rotatable about a rotational axis (5a; 5a') in a direction of rotation (5b; 5b') and the shell surface of which has at least one convexly running region (5c; 5c'), whose distance to the rotational axis (5a; 5a') increases in the direction of rotation (5b; 5b') of the cam (5; 5'), and at least one concavely running region (5d; 5d'), the radius of curvature of which is adapted to the diameter of the round blanks (1).

2. Device according to Claim 1,
**characterized in that** the cam (5) is arranged between two guide plates (6), which are rotatable with the cam (5) about the rotational axis (5a).

3. Device according to Claim 2,
**characterized in that**
the spacing of the guide plates (6) is adapted to the thickness, as well as to a possibly present maximum bow of the round blanks (1).

4. Device according to Claim 2 or 3,
**characterized in that**
the contour of the guide plates (6) is adapted to the thickness of the round blanks (1).

5. Device according to one of Claims 1 to 4,
**characterized in that**
the guide rail (4) is arranged vertically above the extrusion sleeve (2) or the punch (3).

6. Device according to one of Claims 1 to 5,
**characterized in that**
the rotational axis (5a) of the cam (5) is arranged laterally outside of the guide rail (4).

## Revendications

1. Dispositif de formage par fluage de ronds (1), comprenant une douille de pressage (2) et un poinçon (3), au moyen duquel les ronds (1) peuvent être pressés dans la douille de pressage (2), ainsi qu'un agencement d'amenée (4, 5, 6), au moyen duquel les ronds (1) peuvent être transportés entre le poinçon (3) et la douille de pressage (2), l'agencement d'amenée (4, 5, 6) comprenant un rail de guidage (4), dans lequel les ronds (1) sont disposés les uns derrière les autres, et à l'extrémité inférieure duquel sont disposés des moyens (5, 6) pour séparer les ronds (1),
**caractérisé en ce que**
les moyens de séparation (5, 6) comprennent une came de séparation (5 ; 5'), pouvant tourner dans un sens de rotation (5b ; 5b') autour d'un axe de rotation (5a ; 5a'), dont la surface d'enveloppe comprend au moins une région (5c ; 5c') s'étendant de manière convexe, dont la distance à l'axe de rotation (5a ; 5a') augmente dans le sens de rotation (5b ; 5b') de la came (5 ; 5'), et comprend au moins une région (5d ; 5d') s'étendant de manière concave, dont le rayon de courbure est adapté au diamètre des ronds (1).

2. Dispositif selon la revendication 1,
**caractérisé en ce que**
la came (5) est disposée entre deux plaques de guidage (6), lesquelles peuvent tourner avec la came (5) autour de l'axe de rotation (5a).

3. Dispositif selon la revendication 2,
**caractérisé en ce que**
la distance entre les plaques de guidage (6) est adaptée à l'épaisseur ainsi qu'à un bombement maximal éventuellement présent des ronds (1).

4. Dispositif selon la revendication 2 ou 3,
**caractérisé en ce que**
le contour des plaques de guidage (6) est adapté à l'épaisseur des ronds (1).

5. Dispositif selon l'une quelconque des revendications 1 à 4,
**caractérisé en ce que**
le rail de guidage (4) est disposé verticalement au-dessus de la douille de pressage (2) respectivement du poinçon (3).

6. Dispositif selon l'une quelconque des revendications 1 à 5,
**caractérisé en ce que**
l'axe de rotation (5a) de la came (5) est disposé latéralement à l'extérieur du rail de guidage (4).
